# EUROPÄISCHE PATENTSCHRIFT

(11) **EP 2 053 868 B1**
(45) Veröffentlichungstag und Bekanntmachung des Hinweises auf die Patenterteilung: **22.12.2010**
(21) Anmeldenummer: 07119372.6
(22) Anmeldetag: 26.10.2007
(51) Int. Cl.: H04N 17/00, H04N 13/00

(54) **Ortsauflösender optoelektronischer Sensor mit Testeinheit und Testverfahren hierfür**
Spatial opto-electronic sensor with test unit and test method
Capteur optoélectronique haute résolution doté d'une unité de test et procédé de test correspondant

(43) Veröffentlichungstag der Anmeldung: 29.04.2009
(73) Patentinhaber: SICK AG, 79183 Waldkirch (DE)
(72) Erfinder: Wüstefeld, Martin, 79350, Sexau (DE); Hammes, Dr. Markus, 79102, Freiburg (DE)
(74) Vertreter: Ludewigt, Christoph

(56) Entgegenhaltungen:
- EP-A- 1 813 961
- DE-A1- 10 245 720
- DE-A1-102004 035 243
- DE-A1-102005 056 265
- JP-A- 11 027 704
- US-A- 5 675 380

## Beschreibung

Die Erfindung betrifft einen ortsauflösenden optoelektronischen Sensor mit einer Testeinheit, insbesondere eine Sicherheitskamera sowie ein Testverfahren für einen solchen Sensor nach den Oberbegriffen von Anspruch 1 beziehungsweise 8.

Der Einsatz eines kamerabasierten Sensors zur Überwachung eines Raumbereichs erfordert in vielen Anwendungen, die Funktionsfähigkeit des Sensors während des Betriebes sicherzustellen. Dies gilt besonders dann, wenn ein Ausfall des Sensors hochkritisch ist, beispielsweise weil Leben und Gesundheit von Bedienpersonal in dem Raumbereich von Überwachungsfunktionen des Sensors abhängt, wie dies in der Sicherheitstechnik der Fall ist. In solchen Anwendungen finden fortlaufend Systemtests der für den Betrieb notwendigen Komponenten statt. Speziell benötigt das optische System eine sehr hohe Zuverlässigkeit der geometrischen Abbildungseigenschaften, erst recht wenn die Abbildung mit Weitwinkelobjektiven erfolgt, um den Überwachungsbereich abzudecken, denn in diesem Fall zeigen kleinste Lageänderungen zwischen dem Bildaufnehmer und dem Objektiv oder auch temperaturabhängige Verschiebungen der Abbildung große Effekte.

Derartigen Anforderungen sind bekannte Tests zur Verschmutzungsüberwachung, zur Überwachung der Funktionsfähigkeit des Bildaufnehmers und dergleichen nicht gewachsen. In herkömmlichen Systemen ist zwar eine Vielzahl verschiedener Untersysteme zum Test der angesprochenen Funktionen vorgesehen, wie etwa eine Verschmutzungsmessung auf der Basis von Transmissionsmessungen der Frontscheibe oder auf Basis interner Totalreflexion. Es sind auch Testmöglichkeiten zur Überwachung der Funktionsfähigkeit des Bildaufnehmers bekannt, etwa aus der EP 0 902 402 A1, wo der Bildaufnehmer zu Testzwecken von einer Diode geblendet wird. Weiterhin ist bekannt, dass ein Lichtstrahl einer Beleuchtung des Sensors von der Frontscheibe teilreflektiert und somit ähnlich der Blendung mit einer Diode zum Test des Bildaufnehmers verwendet werden kann. Dabei wird jeweils der gesamte Aufnahmechip beleuchtet, so dass die Funktionsfähigkeit der Pixel erkannt wird. Frontscheibe oder Objektiv werden mit diesen Verfahren nicht überprüft. Somit reichen diese Tests nicht aus, alle Abbildungseigenschaften der Sicherheitskamera zu garantieren, und die Integration aller verfügbaren Testverfahren ist aufwändig, teuer und benötigt viel Platz im Gerät.

Die JP 11 027704 A beschreibt eine CCD-Kamera mit einer Selbstdiagnose, bei der mittels eines LCD-Shutters über einen Mustergenerator ein Diagnosemuster in den Aufnahmepfad eingeblendet wird. Durch Vergleich des aufgenommenen Musters mit einem Referenzmuster wird der Status der Kamera diagnostiziert.

Aus der DE 102 45 720 A1 ist eine stereoskopische 3D-Kamera bekannt, welche zwei algorithmisch verschiedene Auswertungsverfahren verwendet, um durch gegenseitigen Vergleich der Auswertungen Fehler aufzudecken und zu kompensieren. Das System führt beim Einschalten einen nicht näher definierten Selbsttest der Auswerteeinheit und der Bildaufnahmeeinheiten auf einwandfreie Funktion aus.

Die DE 10 2005 056 265 A1 offenbart eine weiteres 3D-Kamerasystem, welches aus zwei Lichtlaufzeitkameras besteht. Fehlerhafte Abstandsdaten werden erkannt, indem ein erstes und zweites Abbild aufgenommen und die beiden Abbilder miteinander verglichen werden.

In der EP 1 813 961 A2 ist eine Überwachungsvorrichtung mit einem Bildaufnehmer gezeigt, welche die Verschmutzung der Frontscheibe detektieren kann. Dabei strahlt ein Lichtsender von innen so auf die Frontscheibe, dass nur bei Verschmutzung diffuses Streulicht den Bildaufnehmer erreicht. In einer Ausführungsform ist die Frontscheibe von vorneherein im Auftreffpunkt des Lichtsenders diffus ausgebildet. Aus der Position des somit stets aufgenommenen Reflexes kann festgestellt werden, ob Sendeeinheit, Bildaufnehmer und Frontscheibe zueinander richtig justiert sind.

Die DE 10 2004 035 243 A1 offenbart eine Kameraanordnung, bei der Empfangslicht einen Bildaufnehmer und zusätzlich mittels Strahlteiler einen weiteren Lichtempfänger trifft. Die Auswirkung dynamischer Änderungen der aktiven Beleuchtung des Überwachungsbereichs in Bildaufnehmer und Lichtempfänger werden dann verglichen, um den Bildaufnehmer zu testen.

Die US 5,675,380 schließlich zeigt eine Verzerrungskorrektur für eine Kamera. Dabei wird ein regelmäßiges Testmuster eingespielt und eine Korrekturfunktion berechnet, welche die tatsächliche Abbildung in das bekannte eigentliche Testmuster überführt. Im Betrieb werden dann Bilddaten mit der Korrekturfunktion entzerrt.

Es ist daher Aufgabe der Erfindung, eine Testmöglichkeit für einen ortsauflösenden optoelektronischen Sensor anzugeben, welche die Funktionsfähigkeit des Sensors in einem möglichst großen Umfang sicherstellt.

Diese Aufgabe wird durch einen Sensor nach Anspruch 1 und durch ein Testverfahren nach Anspruch 8 gelöst. Indem eine Prüfmarke im Innenraum des Gehäuses vorgesehen ist und diese Prüfmarke auf dem Bildsensor Prüfmarken-Bilddaten erzeugt, kann sowohl die Funktionsfähigkeit der elektrischen Komponenten des Sensors, insbesondere des Bildaufnehmers, als auch der gesamte optische Pfad einschließlich des Aufnahmeobjektivs im Inneren des Sensors überprüft werden. Daraus ergibt sich der weitere Vorteil, die Abbildungseigenschaften sowohl der Frontscheibe wie auch des Objektivs zu bestimmen und bei einer zu großen Beeinträchtigung beispielsweise durch eine Wartungsanforderung oder eine Warnung zu reagieren. Mechanische Einwirkungen, Verunreinigungen oder Beschädigungen sowie temperaturabhängige Verschiebungen an Frontscheibe oder Objektiv werden damit zuverlässig erkannt, die geometrische Kalibrierung bleibt erhalten. Mit nur einem Testverfahren wird damit die Einsatzfähigkeit des Sensors sowohl hinsichtlich der Optik als auch hinsichtlich der Elektronik geprüft. Damit werden gegenüber herkömmlichen Lösungen nicht nur die Testmöglichkeiten erweitert, es wird sogar noch gleichzeitig die Systemkomplexität reduziert.

In dem Sensor ist eine Warn- oder Absicherungseinrichtung vorgesehen, die dafür ausgebildet ist, einen unzulässigen Objekteingriff in dem Raumbereich zu erkennen und eine Warnung auszugeben oder eine Gefahrenquelle abzusichern. Für solche sicherheitstechnischen Anwendungen ist besonders wichtig, jederzeit einen zuverlässigen Selbsttest zur Verfügung zu stellen. Dabei kann der Sensor Teilbereiche des überwachten Raumbereichs unterscheiden, in denen Eingriffe unkritisch sind, zunächst lediglich einer Warnung bedürfen oder sofort zu einem Schaltereignis mit Absicherung einer überwachten Gefahrenquelle führen müssen. Ebenso können gewisse Objekteingriffe vorab eingelernt und für den späteren Betrieb erlaubt werden, etwa der Fahrweg eines Roboters oder einer Palette. Eine entsprechende absichernde Reaktion des Sensors erfolgt vorzugsweise nicht nur auf einen unzulässigen Objekteingriff, sondern auch, wenn die Testeinheit einen Fehler erkannt hat.

Der Sensor ist bevorzugt ein dreidimensionaler Sensor nach dem Prinzip der Stereoskopie, der Lichtlaufzeit oder der aktiven Triangulation. Gerade bei der Bestimmung der Entfemungsdimension machen sich Abbildungsfehler besonders störend bemerkbar, und die erfindungsgemäß vorgesehenen erweiterten Testmöglichkeiten erleichtern es, zuverlässige dreidimensionale Bilddaten aufzunehmen.

Vorteilhafterweise sind zwei Bildsensoren mit jeweils einem Objektiv vorgesehen und die Prüfmarke ist derart angeordnet, dass je ein Abbild der Prüfmarke sowohl durch das eine Objektiv auf dem einen Bildsensor, als auch durch das andere Objektiv auf dem anderen Bildsensor erzeugt werden kann, und wobei die Testeinheit dafür ausgebildet ist, anhand von Prüfmarken-Bilddaten der Abbilder eine Veränderung eines Basisabstands der Bildsensoren untereinander zu erkennen. Mehrere Bildsensoren können unterschiedlichen Typs sein, etwa eine Infrarotkamera neben einer Farbkamera oder eine dreidimensionale Kamera neben einer dreidimensionalen Kamera, um die Raumbereichs-Bilddaten diversitär-redundant auswerten zu können, oder es handelt sich um die beiden Bildsensoren einer Stereokamera. Besonders im Falle der Stereokamera ist ein konstanter Basisabstand wichtig, da sonst die veränderte Triangulationsbasis bei der stereoskopischen Bestimmung der Entfernung die dreidimensionalen Bilddaten verfälscht.

Das Objektiv weist ein Linsensystem mit mindestens einer Linse auf, und das Linsensystem ist so ausgebildet und angeordnet, dass Bereiche des Linsensystems, durch die Licht der Prüfmarke fällt, ein scharfes Abbild der Prüfmarke auf dem Bildsensor erzeugen. Vor allem wenn Bereiche des Linsensystems etwa an dessen Rand die Prüfmarke auf dem Bildsensor abbilden, wird die Aufnahme von Bilddaten des Raumbereichs nicht beeinträchtigt. Ein scharfes Abbild der Prüfmarke ermöglicht differenziertere Prüfmarken-Bilddaten und somit eine genauere Überprüfung der Abbildungseigenschaften.

Die Prüfmarke ist vorteilhafterweise auf einer Innenseite der Frontscheibe und vorzugsweise außerhalb des optischen Pfades vom Raumbereich zum Bildsensor angeordnet und es sind aktive oder passive Prüfmarken-Erzeugungselemente vorgesehen, insbesondere Lichtquellen oder Reflektoren, welche dafür ausgebildet sind, die Prüfmarke als Lichtreflex an der Innenseite der Frontscheibe zu erzeugen. Die Prüfmarke fällt damit automatisch in den Abbildungsbereich des Bildsensors, ohne die Überwachung des Raumbereichs zu stören. Sie ist außerdem lichtstark und kann gut augewertet werden. Grundsätzlich ist auch eine rein passive, also nicht angeleuchtete Prüfmarke denkbar. Diese Prüfmarke ist aber wegen fehlender Lichtstärke schwer oder gar nicht erkennbar. Ähnlich wäre denkbar, die Prüfmarke nicht an der Frontscheibe vorzusehen, man begibt sich dann aber des Vorteils, auch Eigenschaften der Frontscheibe zu testen.

Die Prüfmarke ist bevorzugt ein Leuchtfleck oder ein regelmäßiges flächiges Muster, insbesondere ein Linienmuster, ein Gitternetz oder ein Punktmuster, wobei die Prüfmarken-Erzeugungselemente eine dem Muster entsprechende Struktur aufweisen und wobei ein Strahlformer in dem optischen Pfad von den Prüfmarken-Erzeugungselementen zur Innenseite der Frontscheibe angeordnet ist, insbesondere eine Linse oder ein diffraktives optisches Element. Ein Leuchtfleck ist besonders einfach zu erzeugen und genügt im Prinzip zum Bestimmen des Verzeichnungsfehlers, da dieser global ist, je mehr Informationen aber das flächige Muster enthält, umso genauer können die aktuellen Abbildungseigenschaften des Objektivs bestimmt werden. Ein strahlformendes Element vor den Prüfmarken-Erzeugungselementen sorgt dafür, dass die Prüfmarke scharf auf der Innenseite der Frontscheibe abgebildet werden kann.

Ferner ist eine Kontrastmusterbeleuchtung zur Erzeugung eines Kontrastmusters in dem Raumbereich vorgesehen, wobei die Kontrastmusterbeleuchtung zugleich als aktive Prüfmarken-Erzeugungselemente oder durch Anstrahlen der passiven Prüfmarken-Erzeugungselemente die Prüfmarke erzeugen kann. Ein Kontrastmuster, das in den Raumbereich gestrahlt wird, sorgt für eine kontrollierbare und ausreichende Kontrastierung der zu überwachenden Objekte. Für zahlreiche dreidimensionale Verfahren ist eine solche Kontrastmusterbeleuchtung erforderlich, um die Entfernung hinreichend genau bestimmen zu können. Dient diese Kontrastmusterbeleuchtung gleichzeitig als Quelle der Prüfmarke, so ist durch die Doppelfunktionalität für die Erzeugung der Prüfmarke kein weiteres Elemente in dem Sensor erforderlich, so dass dieser besonders unaufwändig und kompakt aufgebaut werden kann. Weiterhin lässt sich auf diese Weise die Ausgangsleistung der Kontrastmusterbeleuchtung gleich mittesten.

In bevorzugter Weiterbildung ist die Testeinheit dafür ausgebildet, die Prüfmarken-Bilddaten anhand eines Helligkeitsprofils und/oder der geometrischen Form auszuwerten, insbesondere durch Vergleich mit einer eingelernten oder vorgegebenen Referenz und mittels des Vergleichs Eigenschaften des Bildsensors, des Objektivs und/oder der Frontscheibe zu ermitteln, insbesondere deren Beeinträchtigung durch Verschmutzung, Beschädigung oder Dejustierung, und wobei die Testeinheit weiter dafür ausgebildet ist, Raumbereichs-Bilddaten anhand der ermittelten Eigenschaften zu korrigieren, insbesondere mit einem Verzeichnungskorrekturfaktor. Somit kann die Testeinheit die Information des Abbilds der Prüfmarke nutzen, Abweichungen der Abbildungseigenschaften nicht nur zu erkennen, sondern auch quantitativ zu bestimmen und bei der Aufnahme und Auswertung der Raumbereichs-Bilddaten zu berücksichtigen. Solange die Testeinheit somit nur Veränderungen der Abbildungseigenschaften erkennt, die sie noch korrigieren kann, bleibt der Sensor weiterhin einsatzfähig. Dies führt zu geringeren Ausfallzeiten und zu genaueren Überwachungsergebnissen.

In einer besonders bevorzugten Ausführungsform des Sensors ist die Frontscheibe dichroitisch und reflektiert Prüflicht einer ersten Frequenz, welches im Betrieb die Prüfmarke erzeugt, transmittiert dagegen Nutzlicht einer von der ersten Frequenz verschiedenen zweiten Frequenz, welches im Betrieb den Raumbereich beleuchtet, und/oder die Frontscheibe ist polarisationsselektiv und weist somit unterschiedliche Transmissions- und Remissionseigenschaften für unterschiedliche Polarisationen von Licht auf, reflektiert somit Prüflicht einer ersten Polarisation, welches im Betrieb die Prüfmarke erzeugt, transmittiert dagegen Nutzlicht einer von der ersten Polarisation verschiedenen zweiten Polarisation, welches im Betrieb den Raumbereich beleuchtet. Die entsprechenden Polarisationszustände können durch geeignete Polfilter vor der Beleuchtung für die Prüfmarke und vor der Kontrastmusterbeleuchtung für den Raumbereich erzeugt werden. Entsprechende polarisationsselektive Transmissions- und Remissionseigenschaften weist beispielsweise schon eine schräggestellte Glasfläche auf. Dies führt zu einer eindeutigen Trennung zwischen dem Nutzlicht aus dem Raumbereich und dem Prüflicht für die Prüfmarke, so dass die Auswertung erleichtert wird.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Draufsicht auf eine erste Ausführungsform des erfin- dungsgemäßen Sensors und dessen Überwachungsbereich;
- Fig. 2a: eine Draufsicht auf einen Teil der Komponenten des Sensors gemäß Fig. 1 zur Erläuterung der optischen Wege der Prüfmarke durch das Objektiv auf den Bildsensor;
- Fig. 2b: eine Draufsicht gemäß Fig. 2a mit einem dejustierten Objektiv zur Erläute- rung der Verzeichnung;
- Fig. 3: eine schematische dreidimensionale Darstellung einer zweiten Ausfüh- rungsform der Erfindung mit einer Stereokamera als Beispiel eines dreidi- mensionalen ortsauflösenden Sensors; und
- Fig. 4: eine Draufsicht auf einen Teil der Komponenten des Sensors gemäß Fig. 3 zur Erläuterung der optischen Wege der Prüfmarken durch die Objektive auf die Bildsensoren der beiden Teilkameras der Stereokamera.

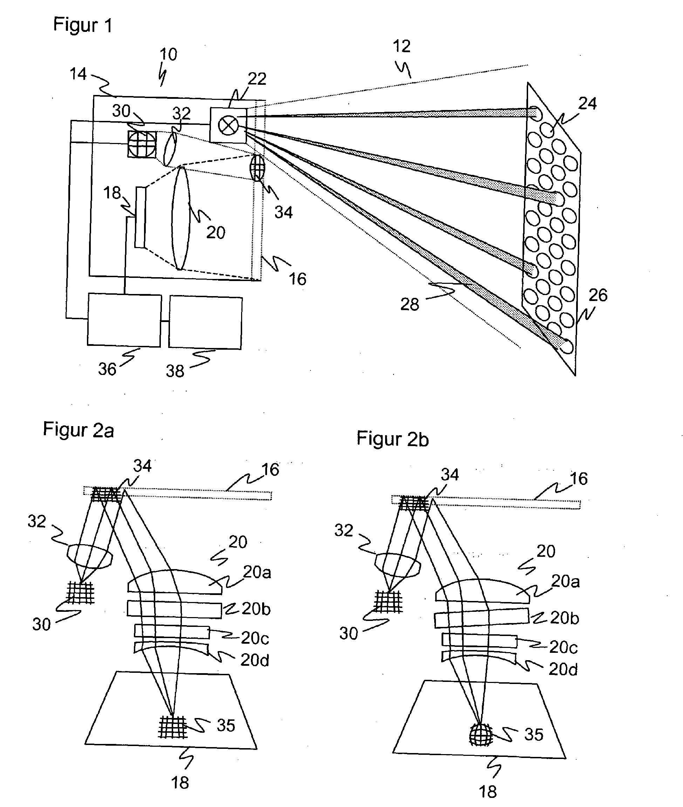

Figur 1 zeigt in schematischer Draufsicht einen Sensor 10 zur Überwachung eines Raumbereichs 12. Die in Figur 1 dargestellte Merkmalskombination fällt nicht in den Schutzbereich der Ansprüche. In einem Gehäuse 14 mit einer Frontscheibe 16 ist ein Bildsensor 18 angeordnet, der durch ein Objektiv 20 und die Frontscheibe 16 Bilddaten des Raumbereichs 12 erzeugen kann. Dieser Bildsensor 18 ist ein zeilen- oder matrixförmiger Aufnahmechip, der ein zeilenförmiges oder rechteckiges Pixelbild aufnimmt und kann beispielsweise ein CCD- oder ein CMOS-Sensor sein.

Eine Beleuchtung 22 des Sensors 10 beleuchtet im Betrieb den zu überwachenden Teil des Raumbereichs 12. Dafür erzeugt die Beleuchtung 22 bevorzugt ein Kontrastmuster 24, welches in Figur 1 beispielhaft als Punktmuster auf einem stilisierten rechteckigen Objekt 26 dargestellt ist. Durch das Kontrastmuster 24 ist ein ausreichender Kontrast der aufgenommenen Bilddaten gesichert. Weiterhin können einzelne Elemente des Kontrastmusters, in der Darstellung der Figur 1 beispielhaft ein einzelner Leuchtpunkt 28, anhand ihrer bekannten relativen Lage zueinander bei der Bildauswertung helfen. Denn wenn auch durch Objekte 26 das Kontrastmuster verzerrt werden kann, so ändert sich doch die relative Lage der Elemente des Kontrastmusters 24 zueinander nicht. Damit kann beispielsweise eine Abschätzung der Entfernung und der Kontur des Objekts 26 vorgenommen werden.

Es sind alternative Kontrastmuster 26 denkbar, etwa ein Linienmuster oder ein Gitternetz oder andere regelmäßige Muster, aber auch unregelmäßige Muster und sogar selbstunähnliche Muster, die unter einfachen geometrischen Operationen wie Verschiebungen, Drehungen und Spiegelungen in keinem Teilbereich ineinander übergeführt werden können. Solche selbstunähnlichen Muster ermöglichen eine eindeutige Zuordnung von Charakteristika des Musterbereichs zu relativer Lage innerhalb des Musters.

Als Lichtquelle in der Beleuchtung 22 dient gewöhnlich ein Halbleiterelement, wie ein Laser oder eine Leuchtdiode. Das Kontrastmuster kann durch eine Maske, vorzugsweise aber durch ein diffraktives optisches Element erzeugt werden, welches Mikrostrukturen aufweist, die Licht des Halbleiterelements in vorgegebener Weise ablenken, um das gewünschte Kontrastmuster 26 zu erhalten.

Der Sensor 10 weist neben der Kontrastbeleuchtung 22 eine Prüfmarken-Beleuchtung 30 auf. Der Prüfmarken-Beleuchtung 30 ist eine strahlformende Optik 32 vorgeordnet, etwa eine Sammellinse, über welche Licht der Prüfmarken-Beleuchtung 30 scharf auf der Innenseite der Frontscheibe 16 abgebildet wird und dort eine Prüfmarke 34 als Lichtreflex erzeugt. Das Objektiv 20 ist so ausgebildet, dass der Strahlengang der Prüfmarke 34 durch das Objektiv 20, vorzugsweise im Randbereich des Objektivs 20, eine scharfe Abbildung der Prüfmarke 34 auf dem Bildsensor 18 erzeugt.

Es sind mehrere Alternativen zu dieser Art der Erzeugung der Prüfmarke 34 denkbar. Im einfachsten Fall könnte eine Prüfmarke 34 aufgeklebt werden, die aber lichtschwach und daher von dem Bildsensor 18 schwer zu erkennen ist. Die Prüfmarken-Beleuchtung 30 kann aus einem oder mehreren Halbleiterleuchtelementen aufgebaut sein, so dass das Muster der Prüfmarke 34 der mehrfachen Lichtquelle entspricht. Die strahlformende Optik 32 kann ein weiteres diffraktives optisches Element oder eine Maske sein, welche das Muster der Prüfmarke 34 formen. Anstelle einer aktiven Prüfmarken-Beleuchtung 30 kann die Prüfmarken-Beleuchtung 30 aus passiven Elementen bestehen, insbesondere Reflektoren, die von einer aktiven Beleuchtung angestrahlt werden und damit die Prüfmarke 34 erzeugen. Als Lichtquelle für dieses Anstrahlen kann wiederum ein eigenes Halbleiterelement dienen, oder das Licht wird aus der Kontrastmusterbeleuchtung 22 ausgekoppelt. Erfindungsgemäß ist vorgesehen, dass die Kontrastmusterbeleuchtung 22 selbst nicht nur den Raumbereich 12 ausleuchtet, sondern durch Teilreflexion an der Innenseite der Frontscheibe 16 oder einem spiegelnden Bereich an der Frontseite des Sensors 10 auch die Prüfmarke 34 erzeugt. Diese Doppelfunktion der Kontrastbeleuchtung 22 hat einerseits den Vorteil, dass keine zusätzliche Prüfmarken-Beleuchtung 30 erforderlich ist, und andererseits ist die Intensität der Prüfmarke 34 zugleich Grundlage für ein Maß der Ausgangsleistung der Kontrastbeleuchtung 22, so dass diese Ausgangsleistung überprüft werden kann.

Eine Steuerung 36 des Sensors 10 ist mit dem Bildsensor 18, der Kontrastbeleuchtung 22 und der Prüfmarken-Beleuchtung 30 verbunden. Weiterhin ist an die Steuerung 36 eine Warn- oder Abschalteinrichtung 38 angeschlossen. Steuerung 36 sowie Warn- oder Abschalteinrichtung 38 können, wie in Figur 1 dargestellt, Teile einer externen Steuerung oder eines externen Rechnersystems sein, sie können aber auch in den Sensor 10 innerhalb des Gehäuses 14 integriert werden.

Die Steuerung 36 schaltet die Kontrastmusterbeleuchtung 22 sowie die Prüfmarken-Beleuchtung 30 je nach Bedarf ein und aus und regelt deren Leistung. Sie empfängt außerdem Bilddaten des Bildsensors 18 sowohl aus dem Raumbereich 12 wie Bilddaten der Prüfmarke 34.

Erkennt die Steuerung 22 durch Auswertung der Bilddaten des Raumbereichs 12 einen unzulässigen Objekteingriff, so wird über die Warn- oder Abschalteinrichtung 38 eine Warnung ausgegeben oder eine Gefahrenquelle abgesichert. Dazu werden häufig in dem Raumbereich 12 Schutzfelder angelegt, in die kein Eingriff erfolgen darf, beispielsweise um gefährliche Maschinenteile herum. Um Ausfallzeiten durch unnötige Fehlalarme so gering wie möglich zu halten, wird häufig um das eigentliche Schutzfeld herum ein Warnbereich angelegt, wo ein unzulässiger Objekteingriff zunächst nur eine Warnung auslöst und erst bei fortgesetztem Eingriff auch in das Schutzfeld die Gefahrenquelle abgesichert wird, also beispielsweise die Maschine des gefährlichen Maschinenteils abgeschaltet oder in eine sichere Position gebracht wird. Es ist auch denkbar, vorab in dem Raumbereich 12 vorhandene Objekte 26 sowie bestimmte erlaubte Bewegungsmuster festgelegter Objekte einzulernen und diese im Betrieb von unzulässigen Objekteingriffen zu unterscheiden, also bei deren Eingriff nicht zu reagieren.

Für Anwendungen in der Sicherheitstechnik ist der Sensor 10 fehlersicher ausgelegt. Dies bedeutet unter anderem, dass der Sensor 10 sich selber in Zyklen unterhalb der geforderten Ansprechzeit testen kann und dass der Ausgang zur sowie die Warn- oder Abschalteinrichtung 38 selbst sicher, beispielsweise zweikanalig ausgelegt ist. Ebenso ist auch die Steuerung 36 selbstsicher, wertet also zweikanalig aus oder verwendet Algorithmen, die sich selbst prüfen können.

Ein besonders wichtiger Test ist dabei, die Funktionsfähigkeit des Bildsensors 18 sowie die optische Integrität der Frontscheibe 16 und des Objektivs 20 zu überprüfen. Dazu dient die Prüfmarke 34, wie nunmehr anhand der Figuren 2a und 2b näher erläutert wird.

In der Figur 2 sind diejenigen Komponenten des Sensors 10 in schematischer Draufsicht dargestellt, welche die Erzeugung und Abbildung der Prüfmarke 34 betreffen. Dabei ist die Darstellung gegenüber der Figur 1 vergrößert und um 90° gedreht. Das Objektiv 20 ist ein Linsensystem aus hintereinander angeordneten Teillinsen 20a - 20d. Es kann aber auch nur eine Linse 20 das Objektiv bilden und die Teillinsen 20a- 20d sind lediglich als Modell für eine Abweichung der Abbildungseigenschaften von einer idealen Linse zu verstehen. Die Figuren 2a und 2b unterscheiden sich voneinander nur darin, dass die Teillinse 20b verkippt ist, das Objektiv 20 der Figur 2b hat also einen Abbildungsfehler, der zu einer Verzeichnung der Abbildung 35 der Prüfmarke 34 auf dem Bildsensor 18 führt. Gründe für einen solchen Abbildungsfehler können beispielsweise Verschmutzungen, Beschädigungen, Lageveränderungen oder Temperaturschwankungen sein.

Anhand der Bilddaten der Abbildung 35 der Prüfmarke 34 ist die Steuerung 36 in der Lage, derartige Abbildungsfehler zu erkennen. Dies kann beispielsweise durch Vergleich mit einer zuvor eingelernten oder einer fest vorgegebenen Erwartungshaltung oder Referenz erfolgen. Dabei kann mittels Bildauswertung das Helligkeitsprofil und die geometrische Form des Abbildes 35 ausgewertet werden, um so die einwandfreie Verzeichnungskorrektur, die Funktion des Bildsensors 18 oder die Verschmutzung der Frontscheibe 16 zu bewerten. Ein höherer Verschmutzungsgrad setzt die globale Helligkeit herab und ist daher im Helligkeitsprofil abzulesen.

Dabei kann die Steuerung 36 also nicht nur qualitativ das Vorliegen eines solchen Abbildungsfehlers erkennen, sondern auch anhand der Verzerrungen des Abbilds 35 den Abbildungsfehler und insbesondere die Verzeichnung quantitativ bestimmen. Damit ist auch eine Korrektur der entsprechend verzeichneten Bilddaten aus dem Raumbereich 12 ermöglicht und es ist nicht notwendig, aufgrund des Abbildungsfehlers sofort die Gefahrenquelle abzusichern. Zur Erhöhung der Verfügbarkeit des Sensors 10 erfolgt eine derartige Absicherung erst, wenn keine ausreichende Korrektur mehr möglich ist. Je komplexer die Prüfmarke 34 ist, umso genauer kann die Korrektur sein. Eine Verzeichnung, wie sie durch Verkippen der Teillinse 20 in Figur 2b dargestellt ist, verursacht aber einen globalen Verzeichnungsfehler, so dass auch ein einzelner Lichtfleck ausreicht. Damit kann die Prüfmarke 34 schon durch eine einzelne Leuchtdiode als Prüfmarken-Beleuchtung 30 erzeugt werden.

Durch den beschriebenen Test über das Abbild 35 der Prüfmarke 34 kann nicht nur die Integrität des Objektivs 20 sichergestellt werden, sondern auch die Frontscheibe 16 überprüft werden. Deren Grad an Beschädigungen oder Verunreinigungen kann ebenfalls anhand des Abbildes 35 erkannt werden und der Sensor 10 kann rechtzeitig zu einer Reinigung oder einem Ersetzen der Frontscheibe 16 auffordern.

Wenn die Prüfmarke 34 in einem Randbereich der Frontscheibe 16 eingespiegelt wird, so dass das Abbild 35 in einem nicht für die Überwachung des Raumbereichs 12 benötigten Bereich des Bildsensors 18 erzeugt wird, kann der Test parallel zu der eigentlichen Überwachungsfunktion ausgeführt werden. Damit kann jeweils in Auswertungszyklen unterhalb der Ansprechzeit, etwa mit jedem Auswertungszyklus der Bilddaten aus dem Raumbereich 12, und damit praktisch jederzeit, die Funktionsfähigkeit garantiert werden. Alternativ ist denkbar, den Test jeweils nur auf Aufforderung oder zu festen Zeiten auszuführen, etwa beim Einschalten des Sensors 10.

In einer alternativen Ausgestaltung des Sensors 10 arbeitet die Kontrastbeleuchtung 22 und die Prüfmarken-Beleuchtung 30 mit einer unterschiedlichen Frequenz. Dafür kommt jegliches Licht im ultravioletten, sichtbaren oder infraroten Bereich in Betracht. Die Frontscheibe 16 ist in diesem Fall dichroitisch, transmittiert also das Nutzlicht der Kontrastbeleuchtung 22 für die Beleuchtung des Raumbereichs 12, reflektiert dagegen das Prüflicht der Prüflicht-Beleuchtung 30 für die Erzeugung der Prüfmarke 34. Damit gelangt kein störendes Prüflicht in den Raumbereich 12 und die Steuerung 36 kann Prüflicht und Nutzlicht zur vereinfachten Bildauswertung eindeutig anhand der Frequenz unterscheiden. Eine ganz ähnliche Ausführungsform ist durch unterschiedliche Polarisationen der Kontrastbeleuchtung 22 und der Prüfmarken-Beleuchtung 30 möglich, wenn die Frontscheibe 16 polarisationsselektiv beziehungsweise optisch anisotrop ist, also unterschiedliche Transmissions- und Remissionseigenschaften je nach Polarisationszustand des Lichts hat, indem entsprechende Polfilter vor den Beleuchtungen 22, 30 eingesetzt werden.

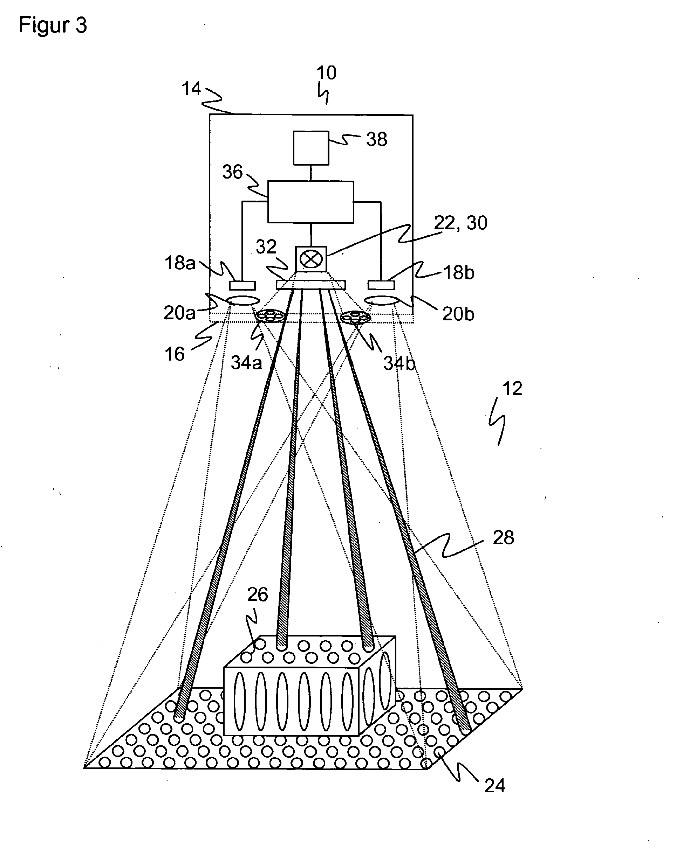

Figur 3 zeigt in einer schematischen dreidimensionalen Darstellung den Aufbau einer zweiten Ausführungsform des erfindungsgemäßen Sensors 10 auf Basis von einer dreidimensionalen Stereoskopie-Kamera. Gleiche oder analoge Komponenten zu der ersten Ausführungsform gemäß Figuren 1 und 2 sind mit gleichen Bezugszeichen versehen und die im Zusammenhang mit der ersten Ausführungsform beschriebenen Varianten sind auch für die zweite Ausführungsform denkbar.

Zwei Kameramodule sind in einem bekannten festen Abstand zueinander montiert. Die zugehörigen Bildsensoren 18a, 18b nehmen Bilddaten aus dem Raumbereich 12 auf. Jedem Bildsensor 18a, 18b ist ein eigenes Objektiv 20a, 20b vorgeordnet. Der Sichtbereich dieser Kameramodule ist in Figur 3 durch gestrichelte Linien dargestellt, die jeweils eine Sichtpyramide bilden und umschließt erfindungsgemäß beispielsweise 45°, kann aber auch 90° und mehr betragen, wobei dies erhöhte Anforderungen an die Komponenten stellt.

In der Mitte zwischen den beiden Kameramodulen 18a, 18b, 20a, 20b ist eine Beleuchtungsquelle angeordnet, welche sowohl die Funktion der Kontrastbeleuchtung 22 als auch diejenige der Prüfmarken-Beleuchtung 30 in sich vereint. Über ein diffraktives optisches Element 32 wird sowohl das Kontrastmuster 26 in dem Raumbereich 12 wie auch je eine Prüfmarke 34a, 34b an der Innenseite der Frontscheibe 16 im Sichtbereich des jeweiligen Kameramoduls 18a, 20a beziehungsweise 18b, 20b erzeugt.

Die Steuerung 36 ist mit beiden Bildsensoren 18a, 18b verbunden und berechnet mit Hilfe einer stereoskopischen Disparitätsschätzung dreidimensionale Bilddaten des Raumbereichs 12. Dazu wird mithilfe des bekannten Basisabstands der Bildsensoren 18a und 18b und der unterschiedlichen Perspektive der beiden aufgenommenen Bilder jeweils die Entfernung von gleichen Bildelementen trianguliert. Alternativ zu der beschriebenen stereoskopischen Erzeugung dreidimensionaler Bilddaten ist auch ein Lichtlaufzeitverfahren oder die aktive Triangulation mittels Elementen des Kontrastmusters 24 von der Erfindung umfasst. Dreidimensionale Bilddaten erlauben eine erweiterte Definition besser angepasster und genauer überwachter Schutzfelder, besonders aus einer erhöhten Position heraus, die für den Anwender möglichst wenig störend ist.

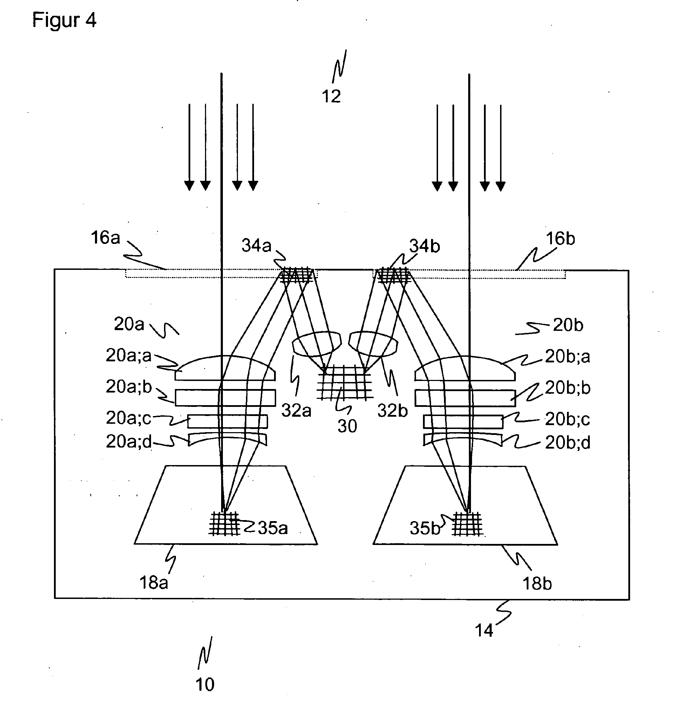

Figur 4 zeigt analog der Figur 2 eine Draufsicht auf nur den Teil der Komponenten des Sensors 10, die mit der Erzeugung der Prüfmarke 34 in Zusammenhang stehen, in der stereoskopischen zweiten Ausführungsform. Dabei ist gegenüber Figur 3 eine Alternative dargestellt, in welcher die Prüfmarken-Beleuchtung 30 nicht als Doppelfunktion der Kontrastbeleuchtung 22, sondern eigenständig über jeweils eigene Strahlformer 32a, 32b für jedes Kameramodul die Prüfmarken 34a, 34b erzeugt.

Die einzelnen Elemente unterscheiden sich von der Figur 2a nur darin, dass die meisten Komponenten doppelt vorgesehen sind, nämlich einmal für jedes Kameramodul. Die Prüfmarken-Beleuchtung 30 ist nur einfach vorgesehen, kann aber ebenfalls doppelt ausgelegt sein, wenn der zusätzliche apparative Aufwand dafür in Kauf genommen wird.

Jedes der beiden Abbilder 35a, 35b der Prüfmarken 34a, 34b wird zur Überprüfung des Kameramoduls ganz analog der ersten Ausführungsform von der Steuerung 36 ausgewertet. Zusätzlich ist noch möglich, aus der Lage des Abbildes 35a, 35b auf dem jeweiligen Bildsensor 18a, 18b den Basisabstand der beiden Kameramodule untereinander zu überwachen. Ändert sich nämlich dieser Basisabstand, so wird die Triangulation und damit die Entfernungsbestimmung der dreidimensionalen Bilddaten aus dem Raumbereich 12 bei der Disparitätsschätzung verfälscht. Daher muss eine solche Veränderung des Basisabstands zumindest in der Auswertung, sicherheitshalber aber besser mechanisch durch eine Wartung korrigiert werden.

## Patentansprüche

1. Ortsauflösender optoelektronischer Sensor (10), insbesondere Sicherheitskamera, der ein Gehäuse (14), einen zeilen- oder matrixförmigen Bildsensor (18) zur Erzeugung von Raumbereichs-Bilddaten eines zu überwachenden Raumbereichs (12), ein im optischen Pfad von dem Raumbereich (12) zu dem Bildsensor (18) angeordnetes strahlformendes Objektiv (20) sowie eine Testeinheit (36) aufweist, welche dafür ausgebildet ist, die Funktionsfähigkeit des Sensors (10) zu überprüfen, wobei eine Prüfmarke (34) in dem Innenraum des Gehäuses auf einer Innenseite einer Frontscheibe (16) vorgesehen und derart angeordnet ist, dass ein Abbild (35) der Prüfmarke (34) durch das Objektiv (20) auf dem Bildsensor (18) erzeugt werden kann und wobei die Testeinheit (36) dafür ausgebildet ist, die Funktionsfähigkeit des Bildsensors (36) und die Integrität des optischen Pfades in dem Innenraum anhand von Prüfmarken-Bilddaten des Abbildes (35) der Prüfmarke (34) zu überprüfen, wobei ein aktives oder passives Prüfmarken-Erzeugungselement (30) vorgesehen ist, wobei eine Warn- oder Absicherungseinrichtung (38) vorgesehen ist, welche dafür ausgebildet ist, einen unzulässigen Objekteingriff in dem Raumbereich (12) zu erkennen und eine Warnung auszugeben oder eine Gefahrenquelle abzusichern, wobei das Objektiv (20) ein Linsensystem (20a-20d) mit mindestens einer Linse aufweist, wobei das Linsensystem (20a-20d) so ausgebildet und angeordnet ist, dass Bereiche des Linsensystems (20a-20d), durch die Licht der Prüfmarke (34) fällt, ein scharfes Abbild der Prüfmarke (34) auf dem Bildsensor (18) erzeugen, und wobei eine Kontrastmusterbeleuchtung (22) zur Erzeugung eines Kontrastmusters (24) in dem Raumbereich (12) vorgesehen ist, die zugleich als aktives Prüfmarken-Erzeugungselement (30) oder durch Anstrahlen des passiven Prüfmarken-Erzeugungselements (30) die Prüfmarke (34) erzeugen kann,
**dadurch gekennzeichnet,**
**dass** die Prüfmarke (34) ein regelmäßiges, unregelmäßiges oder selbstunähnliches flächiges Muster ist, dass die Testeinheit (36) dafür ausgebildet ist, die Prüfmarken-Bilddaten anhand eines Helligkeitsprofils und/oder der geometrischen Form durch Vergleich mit einer eingelernten oder vorgegebenen Referenz auszuwerten und mittels des Vergleichs Eigenschaften des Bildsensors (18), des Objektivs (20) und/oder der Frontscheibe (16) zu ermitteln, insbesondere deren Beeinträchtigung durch Verschmutzung, Beschädigung oder Dejustierung, und dass die Testeinheit (36) weiter dafür ausgebildet ist, Raumbereichs-Bilddaten anhand der ermittelten Eigenschaften zu korrigieren, insbesondere mit einem Verzeichnungskorrekturfaktor.

2. Sensor (10) nach Anspruch 1,
wobei der Sensor (10) ein dreidimensionaler Sensor nach dem Prinzip der Stereoskopie, der Lichtlaufzeit oder der aktiven Triangulation ist.

3. Sensor (10) nach Anspruch 1 oder 2,
wobei zwei Bildsensoren (18a, 18b) mit jeweils einem Objektiv (20a, 20b) vorgesehen sind und die Prüfmarke (30) derart angeordnet ist, dass je ein Abbild (34a, 34b, 35a, 35b) der Prüfmarke (30) sowohl durch das eine Objektiv (20a) auf dem einen Bildsensor (18a) als auch durch das andere Objektiv (20b) auf dem anderen Bildsensor (18b) erzeugt werden kann, und wobei die Testeinheit (36) dafür ausgebildet ist, anhand von Prüfmarken-Bilddaten der Abbilder (35a, 35b) eine Veränderung eines Basisabstands der Bildsensoren (18a, 18b) untereinander zu erkennen.

4. Sensor (10) nach einem der vorherigen Ansprüche,
wobei die Prüfmarke (34) auf der Innenseite der Frontscheibe (16) außerhalb des optischen Pfades vom Raumbereich (12) zum Bildsensor (18) angeordnet ist, und wobei die Prüfmarken-Erzeugungselemente (30) Lichtquellen oder Reflektoren aufweisen und dafür ausgebildet sind, die Prüfmarke (34) als Lichtreflex an der Innenseite der Frontscheibe (16) zu erzeugen.

5. Sensor (10) nach Anspruch 4,
wobei die Prüfmarke (34) ein Linienmuster, ein Gitternetz oder ein Punktmuster ist, und wobei die Prüfmarken-Erzeugungselemente (30) eine dem Muster entsprechende Struktur aufweisen oder wobei ein Strahlformer (32) in dem optischen Pfad von den Prüfmarken-Erzeugungselementen (30) zur Innenseite der Frontscheibe (16) angeordnet ist, insbesondere eine Linse oder ein diffraktives optisches Element.

6. Sensor (10) nach einem der vorherigen Ansprüche,
wobei die Frontscheibe (16) dichroitisch ist und Prüflicht einer ersten Frequenz reflektiert, welches im Betrieb die Prüfmarke (34) erzeugt sowie Nutzlicht einer von der ersten Frequenz verschiedenen zweiten Frequenz transmittiert, welches im Betrieb den Raumbereich (12) beleuchtet, und/oder wobei die Frontscheibe (16) polarisationsselektiv ist und somit unterschiedliche Transmissions- und Remissionseigenschaften für unterschiedliche Polarisationen von Licht aufweist und somit Prüflicht einer ersten Polarisation reflektiert, welches im Betrieb die Prüfmarke (34) erzeugt sowie Nutzlicht einer von der ersten Polarisation verschiedenen zweiten Polarisation transmittiert, welches im Betrieb den Raumbereich (12) beleuchtet.

7. Testverfahren für einen ortsauflösenden optoelektronischen Sensor (10), insbesondere für eine Sicherheitskamera, wobei von einem zeilen- oder matrixförmigen Bildsensor (18) Raumbereichs-Bilddaten eines zu überwachenden Raumbereichs (12) erzeugt werden und die Funktionsfähigkeit des Sensors (10) überprüft wird, wobei eine in dem Innenraum eines Gehäuses (14) des Sensors (10) auf einer Innenseite einer Frontscheibe (16) angeordnete Prüfmarke (34) auf dem Bildsensor (18) abgebildet (35) wird und daraus Prüfmarken-Bilddaten erzeugt werden, und wobei die Funktionsfähigkeit des Bildsensors (18) und die Integrität des optischen Pfades in dem Innenraum anhand der Prüfmarken-Bilddaten überprüft wird, wobei aus den Raumbereichs-Bilddaten unzulässige Objekteingriffe in dem Raumbereich (12) erkannt werden und bei einem unzulässigen Objekteingriff eine Warnung ausgegeben oder eine Gefahrenquelle abgesichert wird, wobei die Prüfmarke (34) durch ein Objektiv (20) im optischen Pfad von dem Raumbereich (12) zu dem Bildsensor (18) auf dem Bildsensor (18) scharf abgebildet wird, wobei aktive Prüfmarken-Erzeugungselemente (30) die Frontscheibe (16) anstrahlen oder passive Prüfmarken-Erzeugungselemente (30) angestrahlt werden und das Licht zu der Frontscheibe (16) reflektieren, und wobei mittels einer Kontrastmusterbeleuchtung (22) ein Kontrastmuster (24) in dem Raumbereich (12) erzeugt wird, wobei die Kontrastmusterbeleuchtung (22) zugleich als aktives Prüfmarken-Erzeugungselement (30) oder durch Anstrahlen des passiven Prüfmarken-Erzeugungselements (30) die Prüfmarke (34) erzeugen,
**dadurch gekennzeichnet,**
**dass** die Prüfmarke ein regelmäßiges, unregelmäßiges oder selbstunähnliches flächiges Muster ist und dass die Prüfmarken-Bilddaten anhand eines Helligkeitsprofils und/oder der geometrischen Form durch Vergleich mit einer eingelernten oder vorgegebenen Referenz ausgewertet werden und mittels des Vergleichs Eigenschaften des Bildsensors (18), des Objektivs (20) und/oder der Frontscheibe (16) ermittelt werden, insbesondere deren Beeinträchtigung durch Verschmutzung, Beschädigung oder Dejustierung, und dass die Raumbereichs-Bilddaten anhand der ermittelten Eigenschaften korrigiert werden, insbesondere mit einem Verzeichnungskorrekturfaktor.

8. Testverfahren nach Anspruch 7,
wobei der Sensor (10) ein dreidimensionaler Sensor nach dem Prinzip der Stereoskopie, der Lichtlaufzeit oder der aktiven Triangulation ist.

9. Testverfahren nach Anspruch 7 oder 8,
wobei in einem Sensor (10) mit zwei Bildsensoren (18a, 18b) mit jeweils einem Objektiv (20a, 20b) die Prüfmarke (30) derart angeordnet wird, dass je ein Abbild der Prüfmarke (34a, 34b, 35a, 35b) sowohl durch das eine Objektiv (20a) auf dem einen Bildsensor (18a) als auch durch das andere Objektiv (20b) auf dem anderen Bildsensor (18b) erzeugt wird, wobei aus Prüfmarken-Bilddaten der Abbilder (35a, 35b) eine Veränderung eines Basisabstands der Bildsensoren (18a, 18b) untereinander erkannt wird.

10. Testverfahren nach einem der Ansprüche 7 bis 9,
wobei die Prüfmarke (34) durch Beleuchten der Innenseite der Frontscheibe (16) als Lichtreflex außerhalb des optischen Pfades vom Raumbereich (12) zu dem Bildsensor (18) entsteht, wobei die Prüfmarke (34) ein Linienmuster, ein Gitternetz oder ein Punktmuster ist.

## Claims

1. A spatially resolving optoelectronic sensor (10), in particular a security camera, which has a housing (14), a line-type or matrix-type image sensor (18) for the generation of spatial-zone image data of a spatial zone (12) to be monitored, a beam shaping objective (20) arranged in the optical path from the spatial zone (12) to the image sensor (18) as well as a test unit (36) which is made to check the operational capability of the sensor (10), wherein a test mark (34) is provided in the inner space of the housing on an inner side of a front screen (16) and is arranged such that an image (35) of the test mark (34) can be generated on the image sensor (18) by the objective (20), and wherein the test unit (36) is made to check the operational capability of the image sensor (36) and the integrity of the optical path in the inner space with reference to test-mark image data of the image (35) of the test mark (34), wherein an active or a passive test-mark generating element (30) is provided, wherein a warning or securing device (38) is provided which is made to recognise an unauthorised object intrusion in the spatial zone (12) and to output a warning or to secure a danger source, wherein the objective (20) has a lens system (20a-20d) having at least one lens, wherein the lens system (20a-20d) is made and is arranged such that regions of the lens system (20a-20d) through which light of the test mark (34) is incident generate a sharp image of the test mark (34) on the image sensor (18), and wherein a contrast pattern illumination (22) is provided for the generation of a contrast pattern (24) in the spatial zone (12), said contrast pattern illumination simultaneously being able to generate the test mark (34) as an active test-mark generation element (30) or by radiation onto the passive test-mark generation element (30),
**characterised in that**
the test mark (34) is a regular pattern, an irregular pattern or a self-dissimilar, areal pattern; **in that** the test unit (36) is made to evaluate the test-mark image data with reference to a brightness profile and/or to the geometrical shape by comparison with a taught or preset reference and to determine properties of the image sensor (18), of the objective (20) and/or of the front screen (16) by means of the comparison, in particular their impairment by contamination, damage or maladjustment; and **in that** the test unit (36) is furthermore made to correct spatial-zone image data with reference to the determined properties, in particular using a distortion correction factor.

2. A sensor (10) in accordance with claim 1, wherein the sensor (10) is a three-dimensional sensor in accordance with the principle of the stereoscopy of the time of flight of light or of active triangulation.

3. A sensor (10) in accordance with claim 1 or claim 2, wherein two image sensors (18a, 18) are each provided with a respective objective (20a, 20b) and the test mark (30) is arranged such that a respective one image (34a, 34b, 35a, 35b) of the test mark (30) can be generated both by the one objective (20a) on the one image sensor (18a) and by the other objective (20b) on the other image sensor (18b), and wherein the test unit (36 is made to recognise a change in a base distance of the image sensors (18a, 18b) among one another with reference to test-mark image data of the images (35a, 35b).

4. A sensor (10) in accordance with any one of the preceding claims,
wherein the test mark (34) is arranged on the inner side of the front screen (16 outside the optical path from the spatial zone (12) to the image sensor (18), and wherein the test-mark generation elements (30 have light sources or reflectors and are made to generate the test mark (34) as a light reflection at the inner side of the front screen (16).

5. A sensor (10) in accordance with claim 4, wherein the test mark (34) is a line pattern, a grid or a dot pattern, and wherein the test-mark generation elements (30) have a structure corresponding to the pattern or wherein a beam shaper (32) is arranged in the optical path from the test-mark generation elements (30) to the inner side of the front screen (16), in particular a lens or a diffractive optical element.

6. A sensor (10) in accordance with any one of the preceding claims, wherein the front screen (16) is dichroic and reflects test light of a first frequency which generates the test mark (34) in operation and transmits useful light of a second frequency different from the first frequency which illuminates the spatial zone (12) in operation, and/or wherein the front screen (16) is polarisation-selective and thus has different transmission and remission properties for different polarisations of light and thus reflects test light of a first polarisation which generates the test mark (34) in operation and transmits useful light of a second polarisation different from the first polarisation which illuminates the spatial zone (12) in operation.

7. A test method for a spatially resolving optoelectronic sensor (10), in particular for a security camera, wherein spatial-zone image data of a spatial zone (12) to be monitored are generated by a line-type or matrix-type image sensor (18) and the operational capability of the sensor (10) is checked, wherein a test mark (34) arranged in the inner space of a housing (14) of the sensor (10) on an inner side of a front screen (16) is imaged on the image sensor (18) and test-mark image data are generated therefrom, and wherein the operational capability of the image sensor (18) and the integrity of the optical path in the inner space is checked with reference to the test-mark image data, wherein unauthorised object intrusions in the spatial zone (12) are recognised from the spatial-zone image data and, on an unauthorised object intrusion, a warning is output or a danger source is secured, wherein the test mark (34) is imaged in a sharp manner on the image sensor (18) by an objective (20) in the optical path from the spatial zone (12) to the image sensor (18), wherein active test-mark generation elements (30) radiate onto the front screen (16) or radiation takes place onto passive test-mark generation elements (30) which reflect the light to the front screen (16) and wherein a contrast pattern (24) is generated in the spatial zone (12) by means of a contrast pattern illumination (22), wherein the contrast pattern illumination (22) simultaneously generates the test mark (34) as an active test-mark generation element (30) or by radiation onto the passive test-mark generation element (30), **characterised in that**
the test mark is a regular pattern, an irregular pattern or a self-dissimilar, areal pattern; and **in that** the test-mark image data are evaluated with reference to a brightness profile and/or to the geometrical shape by comparison with a taught or preset reference, and properties of the image sensor (18), of the objective (20) and/or of the front screen (16) are determined by means of the comparison, in particular their impairment by contamination, damage or maladjustment; and **in that** the spatial-zone image data are corrected with reference to the determined properties, in particular using a distortion correction factor.

8. A test method in accordance with claim 7, wherein the sensor (10) is a three-dimensional sensor in accordance with the principle of the stereoscopy of the time of flight of light or of active triangulation.

9. A test method in accordance with claim 7 or claim 8, wherein the test mark (30) is arranged in a sensor (10) having two image sensors (18a, 18b) each having one respective objectives (20a, 20b) such that one respective image of the test mark (34a, 34b, 35a, 35b) is generated both by the one objective (20a) on the one image sensor (18a) and by the other objective (20b) on the other image sensor (18b), with a change in a base distance of the image sensors (18a, 18b) among one another being recognised from test-mark image data of the images (35a, 35b).

10. A test method in accordance with any one of the claims 7 to 9,
wherein the test mark (34) arises by illumination of the inner side of the front screen (16) as a light reflection outside the optical path from the spatial zone (12) to the image sensor (18), wherein the test mark (34) is a line pattern, a grid or a dot pattern.

## Revendications

1. Capteur optoélectronique (10) à résolution locale, en particulier caméra de sécurité, qui comprend un boîtier (14), un capteur d'images (18) en forme de ligne ou de matrice pour engendrer des données-image d'une région spatiale (12) à surveiller, un objectif (20) de formage de faisceau, agencé dans le trajet optique depuis la région spatiale (12) vers le capteur d'images (18), ainsi qu'une unité de test (36), laquelle est réalisée pour contrôler la capacité de fonctionnement du capteur (10), dans lequel une marque de contrôle (34) est prévue dans le volume intérieur du boîtier sur un côté intérieur d'une plaque frontale (16) et est agencée de telle façon qu'il est possible de générer à travers l'objectif (20) sur le capteur d'images (18) une image (35) de la marque de contrôle (34) à travers l'objectif (20), et dans lequel l'unité de test (36) est réalisée pour contrôler la capacité de fonctionnement du capteur d'images (18) et l'intégrité du trajet optique dans le volume intérieur au moyen de données d'images de marque de contrôle dans l'image (35) de la marque de contrôle (34), et il est prévu un élément actif ou passif (30) pour la génération de marques de contrôle,
dans lequel il est prévu un moyen d'avertissement ou de sécurité (38) qui est réalisé pour reconnaître une intervention inadmissible d'un objet dans la région spatiale (12) et d'émettre un avertissement, ou de sécuriser une source de danger, dans lequel l'objectif (20) comprend un système à lentilles (20a-20d) avec au moins une lentille, ledit système à lentilles (20a-20d) étant réalisé et agencé de telle manière que des régions du système à lentilles (20a-20d) à travers lesquelles tombent la lumière de la marque de contrôle (34) engendrent une image nette de la marque de contrôle (34) sur le capteur d'images (18), et il est prévu un éclairage à motif de contraste (22) pour produire un motif de contraste (24) dans la région spatiale (12) qui est capable, à titre d'élément de génération actif de marque de contrôle ou par éclairage de l'élément de génération passif de marque de contrôle (30), d'engendrer simultanément la marque de contrôle (34),
**caractérisé en ce que**
la marque de contrôle (34) est un motif surfacique régulier, irrégulier ou dépourvu d'auto-similitude,
**en ce que** l'unité de test (36) est réalisée pour évaluer les données d'image de marque de contrôle en s'aidant d'un profil de luminosité et/ou de la forme géométrique par comparaison avec une référence apprise ou prédéterminée, et d'évaluer au moyen de la comparaison des propriétés du capteur d'images (18), de l'objectif (20) et/ou de la plaque frontale (16), en particulier de leur détérioration par encrassement, endommagement ou perte d'ajustement, et
**en ce que** l'unité de test (36) est en outre réalisée pour corriger des données d'images de la région spatiale en s'aidant des propriétés déterminées, en particulier avec un facteur de correction de distorsion

2. Capteur (10) selon la revendication 1,
dans lequel le capteur (10) est un capteur tridimensionnel selon le principe de la stéréoscopie, du temps de propagation de la lumière, ou de la triangulation active.

3. Capteur (10) selon la revendication 1 ou 2,
dans lequel sont prévus deux capteurs d'images (18a, 18b) avec respectivement un objectif (20a, 20b) et la marque de contrôle (30) est agencée de telle façon qu'une image respective (34a, 34b et, 35a, 35b) de la marque de contrôle (30) peut être engendrée aussi bien à travers l'un des objectifs (20a) sur l'un des capteurs d'images (18a) qu'à travers l'autre objectif (20b) sur l'autre capteur d'images (18b), et dans lequel l'unité de test (36) est réalisée pour reconnaître, en s'aidant de données d'images de marque de contrôle dans les images (35a, 35b), une modification de l'écartement de base des capteurs d'images (18a, 18b) l'un par rapport à l'autre.

4. Capteur (10) selon l'une des revendications précédentes,
dans lequel la marque de contrôle (34) est agencée sur le côté intérieur de la plaque frontale (16) à l'extérieur du trajet optique depuis la région spatiale (12) vers le capteur d'images (18), et dans lequel les éléments de génération de marque de contrôle (30) comprennent des sources de lumière ou des réflecteurs et sont réalisés pour engendrer la marque de contrôle (34) sous forme de réflexion de lumière sur la face intérieure de la plaque frontale (16).

5. Capteur (10) selon la revendication 4,
dans lequel la marque de contrôle (34) est un motif de lignes, un motif grillagé ou un motif de points, et dans lequel les éléments de génération de marque de contrôle (30) présentent une structure qui correspond au motif, ou dans lequel un formateur de rayons (32) est agencé dans le trajet optique depuis les éléments de génération de marque de contrôle (30) vers la face intérieure de la plaque frontale (16), en particulier une lentille ou un élément optique à diffraction.

6. Capteur (10) selon l'une des revendications précédentes,
dans lequel la plaque frontale (16) est dichroïque et réfléchi une lumière de contrôle d'une première fréquence qui engendre en fonctionnement la marque de contrôle (34), et qui transmet la lumière utile d'une seconde fréquence différente de la première fréquence qui éclaire en fonctionnement la région spatiale (12), et/ou dans lequel la plaque frontale (16) est sélective vis-à-vis de la polarisation et présente ainsi des propriétés différentes de transmission et de rémission port différente polarisation de la lumière et réfléchie le ainsi une lumière de contrôle d'une première polarisation qui engendre en fonctionnement la marque de contrôle (34), et transmet la lumière utile d'une seconde polarisation différente de la première polarisation qui éclaire en fonctionnement la région spatiale (12).

7. Procédé de test pour un capteur optoélectronique à résolution locale (10), en particulier pour une caméra de sécurité, dans lequel on engendre, à partir d'un capteur d'images en forme de ligne ou en forme de matrice (18), des données d'images d'une région spatiale à surveiller (12), et l'on contrôle la capacité de fonctionnement du capteur (10), dans lequel l'image d'une marque de contrôle (34) agencée sur une face intérieure d'une plaque frontale (16) dans l'espace intérieur d'un boîtier (14) du capteur (10), est formée (35) sur le capteur d'images (18) et on engendre à partir de celle-ci des données d'images de marque de contrôle, et dans lequel la capacité de fonctionnement du capteur d'images (18) et l'intégrité optique du trajet optique dans l'espace intérieur sont contrôlés en s'aidant des données d'images de marque de contrôle, dans lequel des interventions inadmissibles d'objets dans la région spatiale (12) sont reconnus à partir des données d'images de la région spatiale et en cas d'intervention inadmissible un avertissement est émis ou une source de danger est sécurisée, dans lequel une image nette de la marque de contrôle (34) est formée sur le capteur d'images (18) à travers un objectif (20) dans le trajet optique depuis la région spatiale (12) vers le capteur d'images (18), dans lequel des éléments de génération de marque de contrôle (30) illuminent la plaque frontale (16) ou bien des éléments de génération de marque de contrôle (30) passifs sont illuminés et réfléchissent la lumière vers la plaque frontale (16), et dans lequel un motif de contraste (24) est généré dans la région spatiale (12) au moyen d'un éclairage à motif de contraste (22), et dans lequel l'éclairage à motif de contraste (22) engendre simultanément la marque de contrôle (34) soit comme élément de génération de marque de contrôle (30) actif soit par éclairage de l'élément de génération de marque de contrôle (30) passif,
**caractérisé en ce que**
la marque de contrôle est un motif régulier, irrégulier ou dépourvu d'auto-similitude, et **en ce que** les données d'image de marque de contrôle sont évaluées en s'aidant d'un profil de luminosité et/ou de la forme géométrique par comparaison avec une référence apprise ou prédéterminée et, au moyen de la comparaison, on détermine des propriétés du capteur d'images (18), de l'objectif (20) et/ou de la plaque frontale (16), en particulier leur détérioration par encrassement, par endommagement ou par perte d'ajustement, et **en ce que** les données d'images de région spatiale sont corrigées en s'aidant des propriétés déterminées, en particulier avec un facteur de correction de distorsion.

8. Procédé de test selon la revendication 7,
dans lequel le capteur (10) est un capteur tridimensionnel selon le principe de la stéréoscopie, du temps de propagation de la lumière ou de la triangulation active.

9. Procédé de test selon la revendication 7 ou 8,
dans lequel, dans un capteur (10) avec deux capteurs d'images (18a, 18b) comprenant chacun un objectif (20a, 20b), la marque de contrôle (30) est agencée de telle façon qu'une image respective de la marque de contrôle (34a, 34b, 35a, 35b) est engendrée aussi bien à travers l'un des objectifs (20a) sur l'un des capteurs d'images (18a) qu'à travers l'autre objectif (20b) sur l'autre capteur d'images (18b), et à partir de données d'image de marque de contrôle dans les images (35a, 35b) on reconnaît une modification de la distance de base des capteurs d'images (18a, 18b) l'un par rapport à l'autre.

10. Procédé de test selon l'une des revendications 7 à 9,
dans lequel la marque de contrôle (34) apparaît par éclairage de la face intérieure de la plaque frontale (16) sous forme de réflexion de lumière à l'extérieur du trajet optique de la région spatiale (12) vers le capteur d'images (18), dans lequel la marque de contrôle (34) est un motif de ligne, un motif grillagé ou un motif de points.
